# EUROPEAN PATENT SPECIFICATION

(11) **EP 2 447 651 B1**
(45) Date of publication and mention of the grant of the patent: **24.05.2017**
(21) Application number: 10188997.0
(22) Date of filing: 27.10.2010
(51) Int. Cl.: F25D 29/00

(54) **Refrigeration appliance with a humidity control and method for controlling such appliance**
Kühlanwendung mit Feuchtigkeitssteuerung und Verfahren zur Steuerung einer solchen Anwendung
Appareil de réfrigération doté de contrôle de l'humidité et procédé de contrôle d'un tel appareil

(43) Date of publication of application: 02.05.2012
(73) Proprietor: Whirlpool Corporation, Benton Harbor, MI 49022 (US)
(72) Inventor: Paganini, Raffaele, 21025, Comerio (IT); Anderson, Ronald, 21025, Comerio (IT); Boer, Alessandro, 21025, Comerio (IT)
(74) Representative: Guerci, Alessandro

(56) References cited:
- EP-A1- 2 172 725
- EP-A2- 1 959 215
- US-A- 5 303 561

## Description

The present invention relates to a refrigeration appliance and to a method for controlling such appliance.

More particularly, the present invention relates to a refrigeration appliance comprising at least one compartment for food items preservation, a control unit driving a refrigeration circuit comprising a variable cooling capacity compressor, a condenser, an evaporator and a fan blowing air over said evaporator, the compartment comprising a temperature sensor and a humidity sensor.

With the term "refrigeration appliance" we mean any kind of refrigerator independently on the number of compartments and temperature thereof. Therefore in the above definition a single compartment refrigerator is included, as well as refrigerators having multiple cavities (freezer, fresh food compartment etc.).

EP 2 172 725 A1 **discloses a refrigeration appliance according to the preamble of claim 1.**

With the use of a variable cooling capacity compressor, like oil-less linear compressors or variable speed compressors, new control strategies for the appliance become possible. The technical challenge is to combine the need of cooling demand in order to satisfy the set compartment temperature with the need to create a suitable relative humidity inside refrigerator as to obtain an optimum environment to preserve the food items.

It is therefore an object of the present invention to provide a refrigeration appliance in which both temperature and humidity are controlled in a very precise way with a minimal temperature and humidity oscillation.

The above object is reached thanks to the features listed in the appended claims. According to the invention, precise temperature control and humidity control in a refrigerator are obtained by applying close-loop controls where each controller block can be a PID (proportional, integral, derivative) system that establishes a correct cooling capacity for the compressor and a correct humidity value as to reduce the temperature error and humidity error with reference to set values, according to a proportional part of the error, the integrative part of the error and, when needed, with the derivative part of the error. Alternatives to PID control logic techniques can also be used as well, having as an objective function the achievement of target values of temperature and humidity inside the refrigeration cavity.

With such a control type the temperature and humidity swings inside the refrigerator compartments are reduced and the compressor can run at constant cooling capacity (never switched OFF) with a determined value able to compensate the thermal losses.

Further advantages and features of a refrigerator appliance according to the present invention will be clear from the following detailed description of a preferred embodiment, to be read in conjunction with the appended drawings in which:
- figure 1 is a block diagram showing a combination of temperature and humidity control according to the present invention;
- figure 2 is a diagram showing how the temperature and the cooling capacity change vs. time after a change of set temperature;
- figure 3a is a diagram showing an example of cooling request of 100W translated in a Compressor %Duty Cycle and the humidity recovery need been translated with a FAN control during the Compressor OFF state;
- figure 3b is a diagram similar to figure 3a and showing an example of a higher cooling capacity request (i.e 200W) translated in an increased Compressor %Duty Cycle and the humidity recovery need translated to a longer FAN running time; and
- figure 4 shows different fan control strategies to be adopted according to specific conditions of the refrigeration appliance.

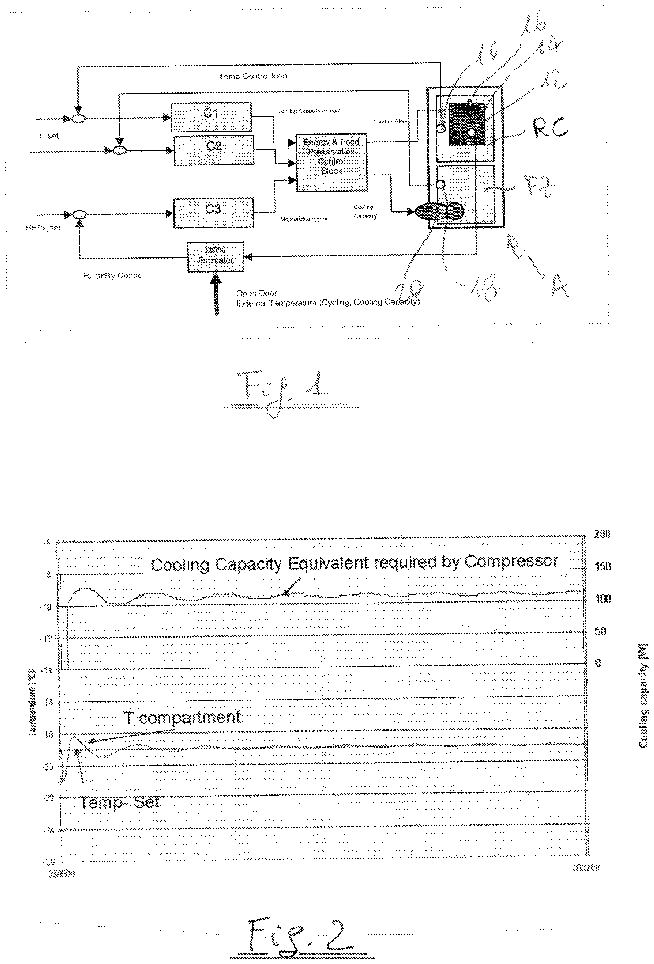

With reference to figure 1, it is shown a control circuit for a double cavity refrigerator A having a freezer compartment FZ and a fresh food compartment RC. The fresh food compartment has a temperature sensor 10, a humidity sensor 12, an evaporator 14 and a fan 16 for blowing air over the evaporator 14. The freezer compartment FZ has a temperature sensor 18 and an evaporator (not shown). The refrigeration circuit of the refrigerator A comprises a variable cooling capacity compressor 20 (for instance a variable speed compressor or linear compressor) and a condenser (not shown). The two compartments RC and FZ of the refrigerator A have each a close control loop system C1 and C2 for keeping the temperatures of such compartment closed to set values. Similarly, the fresh food compartment RC has also a control loop system C3 for keeping the humidity level of fresh food compartment RC closed to a set value HR%_set. All the outputs of the closed loop controls C1, C2 and C3 are fed to an energy and food preservation control block which provides driving signals to the fan 16 and to the variable cooling capacity compressor 20. Due to this arrangement the temperatures and the humidity are controlled precisely as to obtain an optimum food preservation condition inside the refrigerator cavities.

By using the extended range of the cooling capacity of a oil free linear compressor, for instance a compressor using Britten technology, it is possible to combine the temperature request of the fresh food compartment RC with the humidity request.

Figure 2 shows an example of temperature behavior affected by the designed close loop control (PI) in which the set temperature Tset was changed from - 21°C to -19°C of the freezer compartment FZ. The temperature inside such cavity is following the target and the cooling capacity is stable, in the steady state condition which a constant temperature corresponds to. In this case a negligible temperature swing is obtained.

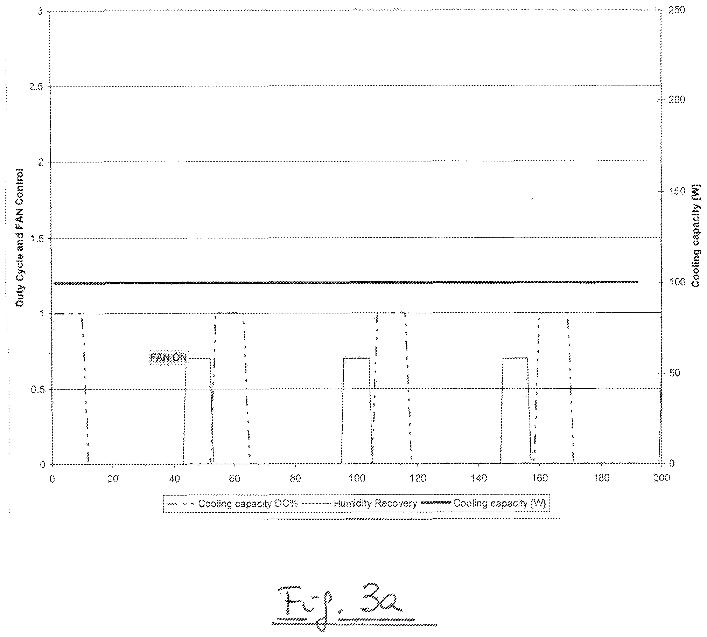

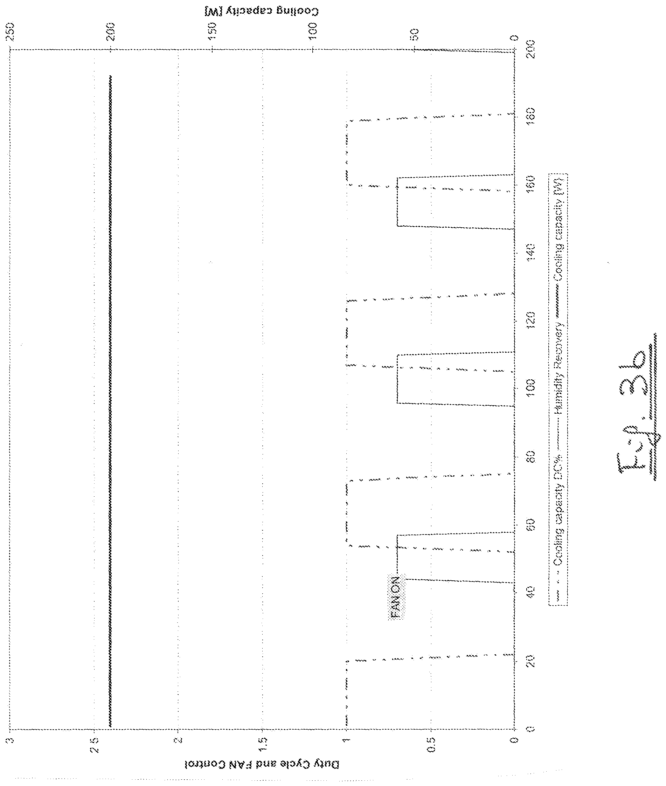

A second method to obtain a temperature control is to provide a cooling request in form of % duty cycle. Figures 3a and 3b show examples of duty cycle that corresponds to a 20% and 40% respectively of total cooling capacity available. Downstream the control blocks C1, C2 and C3 of figure 1, the "Energy and Food Preservation control block" has the objective to drive the compressor 20 according to the established cooling capacity and the fan 16 according the moisturizing request.

In order to obtain an optimum food preservation index, the relative humidity inside the fresh food compartment RC has to be controlled as to obtain an average value of 70- 85% RH.

The fan control strategy according to the present invention allows a good food preservation since it controls the way in which air is moved, this control being fundamental both for the temperature requirements and for the moistening of the foods.

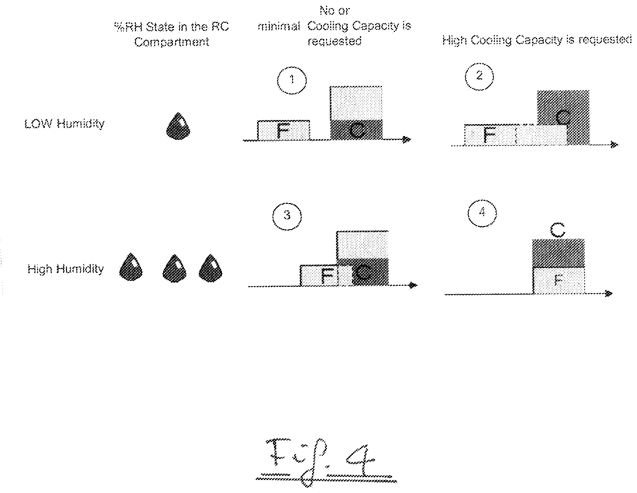

Figure 4 is a schematic view that shows different fan control strategies to be adopted according to different conditions of the refrigerator.

In particular, the applicant has discovered four basic conditions.

In a first condition, corresponding to minimal or zero cooling demand and in which detected humidity is too low compared to the target (70-85%), the fan 16 is run to distribute available moisture during the compressor OFF condition or when it is running at low cooling capacity.

In a second condition, where there is a high cooling demand and the detected humidity is too low, the compressor is run so that the temperature of the evaporator 14 in the fresh food compartment RC is maintained above dew point with the fan 16 ON; if the compressor cooling capacity is inadequate the compressor is run at maximum capacity with fan OFF until fresh food compartment set temperature is achieved, then compressor is turned off (or adjusted at minimum capacity) and the fan 16 is turned on.

In a third condition the humidity is above the set value and the there is no or minimal cooling demand; in this condition the compressor is run so that the evaporator is kept close to 0°C while the fan 16 is ON.

In a fourth and last condition, the relative humidity is higher than the set point and there is a high cooling demand; in this condition the fan and compressor are working contemporaneously to decrease the temperature (cool down) and remove moisture.

Of course the above four conditions are the extreme conditions of a full range of intermediate conditions which can be managed by the closed control loop system according to the present invention.

Even if in the described embodiment the working condition of the fan 16 is only ON and OFF, nevertheless the fan 16 can be also controlled by changing its speed in a predetermined range.

## Claims

1. Refrigeration appliance comprising at least one compartment (RC, FZ) for food preservation, a control circuit (C1, C2, C3) driving a refrigeration circuit comprising a variable cooling capacity compressor (20), a condenser, an evaporator (14) and a fan (16) for blowing air over said evaporator (14), the compartment (RC, FZ) comprising a temperature sensor (10, 18) and a humidity sensor (12), the control circuit being adapted to control the cooling capacity of the compressor (20) and the working condition of the fan (16) on the basis of a close loop control system and according to set temperature and humidity values, **characterized in that** the control circuit is adapted to run the compressor (20) at a cooling capacity so that the evaporator temperature is above dew point and to run the fan (16) with the compressor (20) when there is a high cooling demand and the humidity level is lower than the set value.

2. Refrigeration appliance according to claim 1, wherein the control circuit is adapted to switch ON the fan (16) when the compressor (20) is OFF or when the compressor (20) is working at low cooling capacity in order to increase the humidity level in the compartment (RC).

3. Refrigeration appliance according to claim 1, wherein the control circuit is adapted, in case cooling capacity is inadequate, to run compressor (20) at high cooling capacity while fan (16) is switched OFF, and then it is adapted to switch off the compressor (20) or to run it at low cooling capacity and to switch on the fan (16) when set temperature is reached in the compartment (RC).

4. Refrigeration appliance according to claim 1, wherein the control circuit is adapted to run the compressor (20) so that the evaporator temperature is around 0°C while the fan (16) is switched on when no or minimal cooling capacity is requested and the humidity is higher than the set value.

5. Refrigeration appliance according to claim 1, wherein the control circuit is adapted to run the compressor (20) so that the evaporator temperature is below 0°C while the fan (16) is switched on when high cooling capacity is requested and humidity is higher than set value.

6. Refrigeration appliance according to any of the preceding claims, wherein it comprises a fresh food compartment (RC) and a freezer compartment (FZ), the fan (16) and the humidity sensor (12) being placed in the fresh food compartment (RC).

7. Refrigeration appliance according to any of the preceding claims, wherein the variable cooling capacity compressor (20) is a variable speed compressor.

8. Refrigeration appliance according to any of the preceding claims, wherein the variable cooling capacity compressor (20) is a linear compressor built on Britten technology.

9. Method for controlling a refrigeration appliance comprising at least one compartment (RC, FZ) for food preservation, a control circuit (C1, C2, C3) driving a refrigeration circuit comprising a variable cooling capacity compressor (20), a condenser, an evaporator (14) and a fan (16) for blowing air over said evaporator (14), the compartment (RC, FZ) comprising a temperature sensor (10, 18) and a humidity sensor (12), the cooling capacity of the compressor (20) and the working condition of the fan (16) being controlled on the basis of a close loop control system and according to set temperature and humidity values, **characterized in that** the compressor (20) is run at a cooling capacity so that the evaporator temperature is above dew point and the fan (16) is run with the compressor (20) when there is a high cooling demand and the humidity level is lower than the set value.

10. Method according to claim 9, wherein the fan (16) is switched on when the compressor (20) is OFF or when the compressor (20) is working at low cooling capacity in order to increase the humidity level in the compartment (RC).

11. Method according to claim 9, wherein in case cooling capacity is inadequate, the compressor (20) is run at high cooling capacity while fan (16) is switched off, and then the compressor (20) is switched OFF or run at low cooling capacity and the fan (16) is switched on when set temperature is reached in the compartment (RC).

12. Method according to claim 9, wherein the compressor (20) is run so that the evaporator temperature is around 0°C while the fan (16) is switched on when no or minimal cooling capacity is requested and the humidity is higher than the set value.

13. Method according to claim 9, wherein the compressor (20) is run so that the evaporator temperature is below 0°C while the fan (16) is switched on when high cooling capacity is requested and humidity is higher than set value.

## Patentansprüche

1. Kältegerät, das mindestens ein Fach (RC, FZ) zur Lebensmittelkonservierung umfasst, wobei eine Steuerschaltung (C1, C2, C3) einen Kühlkreislauf antreibt, der einen Kompressor variabler Kühlleistung (20), einen Kondensator, einen Verdampfer (14) und einen Ventilator (16) zum Blasen von Luft über den Verdampfer (14) umfasst, wobei das Fach (RC, FZ) einen Temperaturfühler (10, 18) und einen Feuchtigkeitssensor (12) umfasst, wobei die Steuerschaltung dafür ausgelegt, die Kühlleistung des Kompressors (20) und den Betriebszustand des Ventilators (16) auf der Grundlage von einem geschlossenen Regelsystem und gemäß Temperatur- und Feuchtigkeitssollwerten zu steuern,
**dadurch gekennzeichnet, dass** die Steuerschaltung dafür ausgelegt ist, den Kompressor (20) so bei einer Kühlleistung zu betreiben, dass die Verdampfertemperatur über dem Kondensationspunkt liegt, und den Ventilator (16) zusammen mit dem Kompressor (20) zu betreiben, wenn es einen hohen Kühlbedarf gibt und der Feuchtigkeitswert geringer als der Sollwert ist.

2. Kältegerät nach Anspruch 1, wobei die Steuerschaltung dafür ausgelegt ist, den Ventilator (16) auf EIN zu schalten, wenn der Kompressor (20) AUS ist oder wenn der Kompressor (20) bei geringer Kühlleistung arbeitet, um den Feuchtigkeitswert in dem Fach (RC) zu erhöhen.

3. Kältegerät nach Anspruch 1, wobei die Steuerschaltung, für den Fall, dass die Kühlleistung unzureichend ist, dafür ausgelegt ist, Kompressor (20) bei hoher Kühlleistung zu betreiben, während Ventilator (16) auf AUS geschaltet ist, und sie anschließend dafür ausgelegt ist, den Kompressor (20) auszuschalten oder ihn bei geringer Kühlleistung zu betreiben und den Ventilator (16) einzuschalten, wenn die Solltemperatur in dem Fach (RC) erreicht ist.

4. Kältegerät nach Anspruch 1, wobei die Steuerschaltung dafür ausgelegt ist, den Kompressor (20) so zu betreiben, dass die Verdampfertemperatur ungefähr 0 °C beträgt, während der Ventilator (16) eingeschaltet ist, wenn keine oder nur eine minimale Kühlleistung angefordert wird und die Feuchtigkeit höher als der Sollwert ist.

5. Kältegerät nach Anspruch 1, wobei die Steuerschaltung dafür ausgelegt ist, den Kompressor (20) so zu betreiben, dass die Verdampfertemperatur unter 0 °C liegt, während der Ventilator (16) eingeschaltet ist, wenn hohe Kühlleistung angefordert wird und die Feuchtigkeit höher als der Sollwert ist.

6. Kältegerät nach einem der vorhergehenden Ansprüche, wobei es ein Frischhaltefach (RC) und ein Gefrierfach (FZ) umfasst, wobei der Ventilator (16) und der Feuchtigkeitssensor (12) in dem Frischhaltefach (RC) angeordnet sind.

7. Kältegerät nach einem der vorhergehenden Ansprüche, wobei der Kompressor (20) mit variabler Kühlleistung ein Kompressor mit variabler Geschwindigkeit ist.

8. Kältegerät nach einem der vorhergehenden Ansprüche, wobei der Kompressor (20) mit variabler Kühlleistung ein auf Britten-Technologie aufbauender Linearkompressor ist.

9. Verfahren zur Steuerung eines Kältegeräts, das mindestens ein Fach (RC, FZ) zur Lebensmittelkonservierung umfasst, wobei eine Steuerschaltung (C1, C2, C3) einen Kühlkreislauf antreibt, der einen Kompressor variabler Kühlleistung (20), einen Kondensator, einen Verdampfer (14) und einen Ventilator (16) zum Blasen von Luft über den Verdampfer (14) umfasst, wobei das Fach (RC, FZ) einen Temperaturfühler (10, 18) und einen Feuchtigkeitssensor (12) umfasst, wobei die Kühlleistung des Kompressors (20) und der Betriebszustand des Ventilators (16) auf der Grundlage von einem geschlossenen Regelsystem und gemäß den Temperatur- und Feuchtigkeitssollwerten gesteuert werden,
**dadurch gekennzeichnet, dass** der Kompressor (20) so bei einer Kühlleistung betrieben wird, dass die Verdampfertemperatur über dem Kondensationspunkt liegt, und der Ventilator (16) zusammen mit dem Kompressor (20) betrieben wird, wenn es einen hohen Kühlbedarf gibt und der Feuchtigkeitswert niedriger als der Sollwert ist.

10. Verfahren nach Anspruch 9, wobei der Ventilator (16) eingeschaltet wird, wenn der Kompressor (20) AUS ist oder wenn der Kompressor (20) bei geringer Kühlleistung arbeitet, um den Feuchtigkeitswert in dem Fach (RC) zu erhöhen.

11. Verfahren nach Anspruch 9, wobei, im Fall unzureichender Kühlleistung, der Kompressor (20) bei einer hohen Kühlleistung betrieben wird, während Ventilator (16) ausgeschaltet ist, und der Kompressor (20) anschließend auf AUS geschaltet wird oder bei einer geringen Kühlleistung betrieben wird und der Ventilator (16) eingeschaltet wird, wenn die Solltemperatur in dem Fach (RC) erreicht ist.

12. Verfahren nach Anspruch 9, wobei der Kompressor (20) so betrieben wird, dass die Verdampfertemperatur ungefähr 0 °C beträgt, während der Ventilator (16) eingeschaltet ist, wenn keine oder nur eine minimale Kühlleistung angefordert wird und die Feuchtigkeit höher als der Sollwert ist.

13. Verfahren nach Anspruch 9, wobei der Kompressor (20) so betrieben wird, dass die Verdampfertemperatur unter 0 °C liegt, während der Ventilator (16) eingeschaltet ist, wenn hohe Kühlleistung angefordert wird und die Feuchtigkeit höher als der Sollwert ist.

## Revendications

1. Appareil de réfrigération comprenant au moins un compartiment (RC, FZ) pour la conservation d'aliments, un circuit de commande (C1, C2, C3) commandant un circuit de réfrigération comprenant un compresseur de capacité de refroidissement variable (20), un condenseur, un évaporateur (14) et un ventilateur (16) pour souffler de l'air sur ledit évaporateur (14), le compartiment (RC, FZ) comprenant un capteur de température (10, 18) et un capteur d'humidité (12), le circuit de commande étant adapté pour commander la capacité de refroidissement du compresseur (20) et la condition de travail du ventilateur (16) sur la base d'un système de commande à boucle fermée et selon des valeurs de température et d'humidité de consigne, **caractérisé en ce que** le circuit de commande est adapté pour actionner le compresseur à une capacité de refroidissement de sorte que la température de l'évaporateur soit située au-dessus du point de rosée et pour actionner le ventilateur (16) avec le compresseur (20) lorsqu'il y a une forte demande de refroidissement et que le niveau d'humidité est inférieur à la valeur de consigne.

2. Appareil de réfrigération selon la revendication 1, dans lequel le circuit de commande est adapté pour commuter le ventilateur (16) sur MARCHE lorsque le compresseur (20) est sur ARRET ou lorsque le compresseur (20) travaille à faible capacité de refroidissement afin d'augmenter le niveau d'humidité dans le compartiment (RC).

3. Appareil de réfrigération selon la revendication 1, dans lequel le circuit de commande est adapté, dans le cas où la capacité de refroidissement est inadéquate, pour actionner le compresseur (20) à forte capacité de refroidissement, tandis que le ventilateur (16) est commuté sur ARRET et, ensuite, il est adapté pour déconnecter le compresseur (20) ou l'actionner à faible capacité de refroidissement et connecter le ventilateur (16) lorsque la température de consigne est atteinte dans le compartiment (RC).

4. Appareil de réfrigération selon la revendication 1, dans lequel le circuit de commande est adapté pour actionner le compresseur (20) de sorte que la température de l'évaporateur soit d'environ 0 °C tandis que le ventilateur (16) est connecté lorsqu'aucune capacité de refroidissement ou une capacité de refroidissement minimale est requise et que l'humidité est plus élevée que la valeur de consigne.

5. Appareil de réfrigération selon la revendication 1, dans lequel le circuit de commande est adapté pour actionner le compresseur (20) de sorte que la température de l'évaporateur se situe en dessous de 0 °C tandis que le ventilateur (16) est connecté lorsqu'une forte capacité de refroidissement est requise et que l'humidité est supérieure à la valeur de consigne.

6. Appareil de réfrigération selon l'une quelconque des revendications précédentes, dans lequel il comprend un compartiment d'aliments frais (RC) et un compartiment de surgélation (FZ), le ventilateur (16) et le capteur d'humidité (12) étant placés dans le compartiment d'aliments frais (RC).

7. Appareil de réfrigération selon l'une quelconque des revendications précédentes, dans lequel le compresseur de capacité de refroidissement variable (20) est un compresseur à vitesse variable.

8. Appareil de réfrigération selon l'une quelconque des revendications précédentes, dans lequel le compresseur de capacité de refroidissement variable (20) est un compresseur linéaire construit selon la technologie de Britten.

9. Procédé de commande d'un appareil de réfrigération comprenant au moins un compartiment (RC, FZ) pour la conservation d'aliments, un circuit de commande (C1, C2, C3) commandant un circuit de réfrigération comprenant un compresseur de capacité de refroidissement variable (20), un condenseur, un évaporateur (14) et un ventilateur (16) pour souffler de l'air sur ledit évaporateur (14), le compartiment (RC, FZ) comprenant un capteur de température (10,18) et un capteur d'humidité (12), la capacité de refroidissement du compresseur (20) et la condition de travail du ventilateur (16) étant commandées sur la base d'un système de commande à boucle fermée et selon des valeurs de température et d'humidité de consigne, **caractérisé en ce que** le compresseur (20) est actionné à une capacité de refroidissement de sorte que la température de l'évaporateur se situe au-dessus du point de rosée et que le ventilateur (16) soit actionné avec le compresseur (20) lorsqu'il y a une forte demande de refroidissement et que le niveau d'humidité est inférieur à la valeur de consigne.

10. Procédé selon la revendication 9, dans lequel le ventilateur (16) est connecté lorsque le compresseur (20) est sur ARRET ou lorsque le compresseur (20) est actionné à faible capacité de refroidissement afin d'augmenter le niveau d'humidité dans le compartiment (RC).

11. Procédé selon la revendication 9, dans lequel, dans le cas où la capacité de refroidissement est inadéquate, le compresseur (20) est actionné à forte capacité de refroidissement tandis que le ventilateur (16) est déconnecté et, ensuite, le compresseur (20) est commuté sur ARRET ou est actionné à une faible capacité de refroidissement et le ventilateur (16) est connecté lorsque la température de consigne est atteinte dans le compartiment (RC).

12. Procédé selon la revendication 9, dans lequel le compresseur (20) est actionné de sorte que la température de l'évaporateur se situe à environ 0°C tandis que le ventilateur (16) est connecté lorsqu'aucune capacité de refroidissement ou une capacité de refroidissement minimale est requise et que l'humidité est supérieure à la valeur de consigne.

13. Procédé selon la revendication 9, dans lequel le compresseur (20) est actionné de sorte que la température de l'évaporateur se situe en dessous de 0°C tandis que le ventilateur (16) est connecté lorsqu'une forte capacité de refroidissement est requise et que l'humidité est supérieure à la valeur de consigne.
